# EUROPEAN PATENT SPECIFICATION

(11) **EP 0 369 727 B1**
(45) Date of publication and mention of the grant of the patent: **02.02.1994**
(21) Application number: 89311752.3
(22) Date of filing: 14.11.1989
(51) Int. Cl.: C08F 214/26, C08F 210/02

(54) **Process for preparing tetrafluoroethylene-ethylene copolymers**
Verfahren zur Herstellung von Tetrafluorethylen-ethylen-Copolymeren
Procédé de préparation de copolymères de tetrafluoroéthylène-éthylène

(30) Priority: 17.11.1988 IT 2264388
(43) Date of publication of application: 23.05.1990
(73) Proprietor: AUSIMONT S.p.A., I-20121 Milano (IT)
(72) Inventor: Monti, Claudio, I-20161 Milan (IT)
(74) Representative: Lawrence, Peter Robin Broughton

(56) References cited:
- GB-A- 1 166 020
- US-A- 4 426 501

## Description

The invention relates to the production of copolymers of vinylic monomers comprising tetrafluoroethylene and ethylene.

Such copolymers are usually prepared by polymerisation in suspension in chlorofluorocarbon solvent, in aqueous suspension, or in aqueous emulsion.

Polymerisation in suspension in chlorofluorocarbon solvent can be operated at relatively low pressures and temperatures but does not permit the achievement of high reaction speeds. Polymerisation in aqueous suspension is described in U.S. 2,479,367 and 3,870,689 and can require the presence of a large amount of tertiary butanol as the main constituent of the reaction medium. The product of the polymerisation is a slurry which is difficult to handle, and it is difficult to discharge the reaction product from the reactor vessel.

It is proposed in U.S. 3,859,262 to use particular manganese salts as polymerisation initiators and this permits increased reaction speed, but the speed is still not higher than 60 grams copolymer per litre per hour. The process also has the advantage that the use of organic solvent is avoided.

That patent also describes an aqueous emulsion polymerisation process that can be conducted faster, but it is not possible to perform it at above 85g copolymer per litre per hour.

It can be desirable to perform the polymerisation in the presence of chain transfer agents in order to regulate the molecular weight of the polymer, and the inclusion of such materials tends to decrease the reaction speed.

In U.S. 4,426,501 an aqueous emulsion process is described conducted at 95°C under a pressure of 4.1MPa. This process does allow high reaction speeds but, in order to prevent the risk of explosion, the gaseous mixture fed to the reactor has to be diluted with chloro-pentafluoro-ethane the necessity to use these high temperatures and pressures and this material is inconvenient. Trichlorotrifluoroethane is disclosed as an example of the hydrophobic additive and t-butylalcohol is disclosed as an example of the hydrophilic additive.

It would be desirable to be able to achieve high reaction speeds at lower temperatures and pressures and preferably in the absence of the added chloropentafluoroethane material. It would be desirable to be able to achieve these reaction rates when using a reaction medium that is mainly of water and when the process is adjusted so as to produce relatively low molecular weight polymers.

A process according to the invention for the copolymerisation in an aqueous medium of vinylic monomers comprising tetrafluoroethylene and ethylene is characterised in that the polymerisation is conducted as an aqueous emulsion polymerisation at a temperature of 30 to 95°C under a pressure of from 1.5 to 4.0MPa using a peroxy polymerisation initiator and in the presence of tert.-butyl alcohol and of 1,1,2,2-tetrachloro-1,2-difluoro-ethane (which in the following, for the sake of shortness, is simple called tetrachloro-difluoroethane.

The vinylic monomers generally consist mainly of tetrafluoroethylene and ethylene, for instance in proportions of 40 to 60 mole percent of each. If additional vinylic monomer is present the mixture will generally contain 40 to 60 mole percent of each of tetrafluoroethylene and ethylene and 0.1 to 10 mole percent of third monomer. The third vinylic monomer is generally selected from among those which are commonly used in tetrafluoroethylene-ethylene copolymers. It preferably is a fluorinated monomer, such as a fluoro-olefin, e.g., hexafluoropropene or perfluoroheptene-1, or is a perfluoroalkyl-perfluorovinylether. Also non-fluorinated monomers, such as, e.g., vinyl acetate or 2-methylpropene, can be used.

The amount of tert.-butyl alcohol is usually within the range of from 10 to 60g, preferably 10 to 35g, per each kg of the aqueous medium (i.e., per each kg of mixture of water, tert.-butyl alochol and tetrachloro-difluoroethane).

The amount of tetrachloro-difluoroethane is usually within the range of from 15 to 75g, preferably 20 to 70g, per each kg of the aqueous medium.

By operating with these amounts of tert.-butyl alcohol and of tetrachloro-difuloroethane it is possible to obtain reaction speeds which are often from 120 to 180g of tetrafluoroethylene-ethylene copolymer per litre and per hour.

Lower molecular weights are obtained if the amount of tert.-butyl alcohol is increased, or if the amount of tetrachloro-difluoroethane is increased, or if the amounts of both of the compounds are increased. The use of one only of the compounds yields extremely high molecular weights, and a lower reaction speed.

The addition of 1,1,2-trichloro-1,2,2-trifluoroethane (CCl₂F-CClF₂) (called in the following "trichlorotrifluoroethane" for the sake of shortness) to the polymerisation system has an influence on the molecular weight of the obtained copolymer. More precisely, with the other conditions being the same, the molecular weight increases with increasing amounts of trichlorotrifluoroethane. When this latter compound is used, the weight ratio of trichlorotrifluoroethane to tetrachloro-difluoroethane is usually comprised within the range of from 0.2 to 1.5.

An important advantage of the invention is that water is the main constituent of the aqueous medium, i.e., the continuous phase of the emulsion in which the polymerisation occurs. In particular, it will be appreciated from the foregoing that at least 80 or 90% or more of the aqueous medium is usually water.

Suitable polymerisation initiators are inorganic peroxides and organic peroxides that are soluble in water or in tetrachloro-difluoroethane and which preferably have a half-life time at the reaction temperature within the range of from 5 minutes to 500 minutes, preferably within the range of from 200 to 300 minutes.

Examples of suitable peroxides are trichloroacetyl peroxide, bis-(4-tert.-butyl-cyclohexyl)-peroxydicarbonate, peroxodisuccinic acid, ammonium persulfate and potassium persulfate.

The reaction is preferably carried out at a temperature comprised within the range of from 65 to 80°C. When the reaction is carried out at temperatures lower than 65°C, a polymerisation initiator of peroxy type is generally used which is a redox system, e.g., an ammonium persulfate/silver nitrate system.

The reaction is carried out at a pressure preferably comprised within the range of from 2.0 to 2.5 MPa. When a pressure higher than 2.5MPa is used, the gaseous reaction mixture is generally diluted with a chlorofluorocarbon which is a gas at reaction temperature, e.g., with chloropentafluoroethane.

In order to put the monomers and polymer into emulsion, it is normal to include any of the surfactants that are conventionally used in the preparation of tetrafluoroethylene-ethylene copolymers in emulsion. For instance, ammonium perfluorooctanoate or potassium perfluoroalkylsulfonates, such as the products FC95 and FC98 by 3M, can be used.

The copolymers obtainable in the invention, including the terpolymers, are of particular value for coating electrical cables, in particular in military and aerospace sectors, and, in chemical industry, as linings for equipment which is planned to operate under particularly severe conditions of temperature and/or chemical aggressivity.

The main advantages of the present invention can be summarized as follows:
- high reaction speeds are obtained also at relatively low values of temperature and pressure;
- the main reaction medium is water, with a reduction in operating costs being thus obtained;
- the molecular weight of the obtained copolymers can be easily regulated;
- low-molecular-weight copolymers can be obtained, without the reaction speed being decreased.

The following examples are given for merely illustrative purposes and in no way should be construed as being limitative of the invention.

### Example 1

To an autoclave of 5 litres of capacity, 3.2 litres of deionized, oxygen-deprived water, 36 g of trichloro-trifluoroethane, 204 g of tetrachloro-difluoroethane, 120 g of tert.-butanol and 7.5 g of ammonium perfluoro-octanoate are charged.

The temperature is increased up to 75°C and 1.1 mol of tetrafluoroethylene is then charged. The pressure inside the reactor is increased up to 2.2 MPa with a mixture having the following composition, by weight:

| | |
|---|---|
| - tetrafluoroethylene | 79.5% |
| - ethylene | 20.5% |

The reaction is started by pumping a solution constituted by 1 g of ammonium persulfate and 100 ml of demineralized water into the autoclave. As soon as the pressure inside the reactor decreases by 0.2 MPa, the pressure of 2.2 MPa is restored with the above mixture, and is kept constant. Ninety-five minutes later, the feed is discontinued and the reactor is cooled and emptied. The obtained latex is coagulated by means of the addition of 5 ml of hydrochloric acid. The polymer is washed many times with water and is dried at 150°C. The dry polymer obtained from this test has a weight of 950 g, and its melt-flow index at 297°C, measured according to ASTM D 3159-81a Standard, is of 3.1 grams/10 minutes.

### Example 2

Example 1 was repeated with the difference that no trichlorotrifluoroethane was added, and 240 g of tetrachlorodifluoroethane was added. The reaction was allowed to proceed for 103 minutes. The dry polymer obtained from this test weighed 1020 g, and its melt-flow index at 297°C was of 8.9 grams/10 minutes.

### Example 3

To an autoclave of 5 litres of capacity, 3.2 litres of deionized, oxygen-deprived water, 36 g of trichloro-trifluoroethane, 204 g of tetrachloro-difluoroethane, 40 g of tert.-butanol and 7.5 g of ammonium perfluoro-octanoate are charged.

The temperature is increased up to 75°C and 1.1 mol of tetrafluoroethylene and 0.13 mol of trifluoromethyl-trifluorovinylether are then charged. The pressure inside the reactor is increased up to 2.2 MPa with a mixture having the following composition, by weight:

| | |
|---|---|
| - tetrafluoroethylene | 75.6% |
| - ethylene | 19.5% |
| - trifluoromethyl-trifluorovinylether | 4.9% |

The reaction is started by pumping a solution constituted by 1 g of ammonium persulfate and 100 ml of demineralized water into the autoclave. As soon as the pressure inside the reactor decreases by 0.2 MPa, the pressure of 2.2 MPa is restored with the above said mixture, and is kept constant.One hundred and four minutes later, the feed is discontinued and the reactor is cooled and emptied. The obtained latex is coagulated by means of the addition of 5 ml of hydrochloric acid. The polymer is washed many times with water and is dried at 150°C. The dry polymer obtained from this test has a weight of 1070 g, and its melt-flow index at 297°C is of 1.8 grams/10 minutes.

### Example 4

Example 3 was repeated with the difference that instead of 40 g of tert.-butanol, 80 g of tert.-butanol was added. The reaction was allowed to proceed for 100 minutes. The dry polymer obtained from this test weighed 1090 g, and its melt-flow index at 297°C was of 3.4 grams/10 minutes.

### Example 5

Example 3 was repeated with the difference that instead of 40 g of tert.-butanol, 120 g of tert.-butanol was added. The reaction was allowed to proceed for 96 minutes. The dry polymer obtained from this test weighed 1020 g, and its melt-flow index at 297°C was of 5.9 grams/10 minutes.

### Example 6 (Comparative Example)

Example 3 was repeated with the difference that no tert.-butanol was added. The reaction was allowed to proceed for 124 minutes. The dry polymer obtained from this test weighed 995 g, and its melt-flow index at 297°C was of 0.2 grams/10 minutes.

### Example 7 (Comparative Example)

Example 3 was repeated with the difference that 240 g of trichlorotrifluoroethane and 120 g of tert.-butanol were added, in the absence of tetrachlorotrifluoroethane. The reaction was allowed to proceed for 98 minutes. The dried polymer obtained from this test weighed 960 g, and its melt-flow index at 297°C was of 0.1 grams/10 minutes.

### Example 8 (Comparative Example)

Example 3 was repeated with the difference that no tert.-butanol was added, and 4 ml of carbon tetrachloride was added, to act as the molecular weight regulator. The reaction was allowed to proceed for 190 minutes. The dry polymer obtained from this test weighed 980 g, and its melt-flow index at 297°C was of 6.2 grams/10 minutes.

To be observed that the use of carbon tetrachloride requires a reaction time of 190 minutes, to be compared to the time of 104 minutes required by tertiary butanol.

### Example 9 (Comparative Example)

Example 3 was repeated with the difference that the mixture of chlorofluorocarbon solvents was not added. The reaction was allowed to proceed for 280 minutes. The dry polymer obtained from this test weighed 1010 g, and its melt-flow index at 297°C was of 0.3 grams/10 minutes.

### Example 10

Example 3 was repeated with the difference that trichlorotrifluoroethane was not added, and 120 g of tertiary butanol and 240 g of tetrachlorodifluoroethane were added. The reaction was allowed to proceed for 104 minutes. The dry polymer obtained from this test weighed 990 g, and its melt-flow index at 297°C was of 11,4 grams/10 minutes.

### Example 11

Example 3 was repeated with the difference that trichlorotrifluoroethane was not added, and 80 g of tertiary butanol and 240 g of tetrachlorodifluoroethane were added. The reaction was allowed to proceed for 111 minutes. The dry polymer obtained from this test weighed 970 g, and its melt-flow index at 297°C was of 7.6 grams/10 minutes.

### Example 12

Example 3 was repeated with the difference that trichlorotrifluoroethane was not added, and 84 g of tertiary butanol and 168 g of tetrachlorodifluoroethane were added. The reaction was allowed to proceed for 122 minutes. The dry polymer obtained from this test weighed 975 g, and its melt-flow index at 297°C was of 6.5 grams/10 minutes.

## Claims

1. A process for the copolymerisation in an aqueous medium of vinylic monomers comprising tetrafluoroethylene and ethylene, characterised in that the polymerisation is conducted as an aqueous emulsion polymerisation at a temperature of 30 to 95°C and a pressure of 1.5 to 4.0MPa using a peroxy polymerisation initiator and in the presence of tert.-butyl alcohol and of 1,1,2,2-tetrachloro-1,2-difluoro-ethane.

2. A process according to claim 1 in which the amount of tertiary butyl alcohol is 10 to 60 g per kg of water, the butyl alcohol and the tetrachloro-difluoroethane.

3. A process according to claim 1 or claim 2 in which the amount of the tetrachloro-difluoroethane is from 15 to 75 g/kg of the water, the butyl alcohol and the tetrachloro-difluoroethane.

4. A process according to any preceding claim in which the aqueous medium also includes 1,1,2-trichloro-1,2,2-trifluoroethane.

5. A process according to claim 4 in which the ratio of the trichloro-trifluoroethane:tetrachloro-difluororethane is within the range 0.2 to 1.5.

6. A process according to any preceding claim in which the reaction is conducted at 65 to 80°C.

7. A process according to any preceding claim in which the reaction is conducted at a pressure of 2.0 to 2.5MPa.

8. A process according to any preceding claim in which at least 80% by weight of the continuous phase of the emulsion is water.

9. A process according to any preceding claim in which the monomers comprise 40 to 60 mole percent of each of tetrafluoroethylene and ethylene and, optionally, up to 10 mole percent of a third vinylic monomer.

10. A process according to any preceding claim in which the monomers include also a fluorinated vinyl monomer.

## Patentansprüche

1. Verfahren zur Copolymerisation in einem wässrigen Medium von Vinylmonomeren, die Tetrafluorethylen und Ethylen umfassen, dadurch gekennzeichnet, daß die Polymerisation in wässriger Emulsion bei einer Temperatur von 30 bis 95° C und einem Druck von 1,5 bis 4,0 MPa unter Verwendung eines Peroxy-Polymerisationsinitiators und in Anwesenheit von tert.-Butylalkohol und 1,1,2,2-Tetrachlor-1,2-difluorethan erfolgt.

2. Verfahren nach Anspruch 1, worin die Menge an tert.-Butylalkohol 10 bis 60 g pro kg an Wasser, Butylalkohol und Tetrachlordifluorethan beträgt.

3. Verfahren nach Anspruch 1 oder 2, worin die Menge an Tetrachlordifluorethan von 15 bis 75 g/kg an Wasser, Butylalkohol und Tetrachlordifluorethan beträgt.

4. Verfahren nach einem der vorhergehenden Ansprüche, worin das wässrige Medium auch 1,1,2-Trichlor-1,2,2-trifluorethan umfaßt.

5. Verfahren nach Anspruch 4, worin das Verhältnis von Trichlortrifluorethan: Tetrachlordifluorethan im Bereich von 0,2 bis 1,5 liegt.

6. Verfahren nach einem der vorhergehenden Ansprüche, worin die Umsetzung bei 55 bis 80 ° C erfolgt.

7. Verfahren nach einem der vorhergehenden Ansprüche, worin die Umsetzung bei einem Druck von 2,0 bis 2,5 MPa erfolgt.

8. Verfahren nach einem der vorhergehenden Ansprüche, worin wenigstens 80 Gew.-% der kontinuierlichen Phase der Emulsion Wasser ist.

9. Verfahren nach einem der vorhergehenden Ansprüche, worin die Monomere 40 bis 60 Mol-% von Tetrafluorethylen und Ethylen umfassen und gegebenenfalls bis zu 10 Mol-% eines dritten Vinylmonomers.

10. Verfahren nach einem der vorhergehenden Ansprüche, worin die Monomere auch ein fluoriertes Vinylmonomer umfassen.

## Revendications

1. Un procédé de copolymérisation en milieu aqueux de monomères vinyliques comprenant du tétrafluoroéthylène et de l'éthylène caractérisé en ce que la polymérisation est réalisée sous la forme d'une polymérisation en émulsion aqueuse, à une température comprise entre 30 et 95°C et à une pression comprise entre 1,5 et 4,0 MPa, en utilisant un initiateur de polymérisation péroxy et en présence d'alcool tert.-butylique et de 1,1,2,2-tétra-chloro-1,2-difluoro-éthane.

2. Un procédé selon la revendication 1, caractérisé en ce que la quantité d'alcool tert.-butylique est comprise entre 10 et 60 g par kg d'eau, d'alcool butylique et de tétrachlorodifluoroéthane.

3. Un procédé selon la revendication 1 ou 2, caractérisé en ce que la quantité de tétrachlorodifluoroéthane est comprise entre 15 et 75 g par kg d'eau, d'alcool butylique et de tétrachlorodifluoroéthane.

4. Un procédé selon l'une quelconque des revendications précédentes, caractérisé en ce que le milieu aqueux comprend également du 1,1,2-trichloro-1,2,2-trifluoroéthane.

5. Un procédé selon la revendication 4, caractérisé en ce que le rapport trichloro-trifluoroéthane/tetrachlorodifluoroéthane est compris entre 0,2 et 1,5.

6. Un procédé selon l'une quelconque des revendications précédentes, caractérisé en ce que la réaction est mise en oeuvre à une température comprise entre 65 et 80°C.

7. Un procédé selon l'une quelconque des revendications précédentes, caractérisé en ce que la réaction est mise en oeuvre à une pression comprise entre 2,0 et 2,5 MPa.

8. Un procédé selon l'une quelconque des revendications précédentes, caractérisé en ce qu'au moins 80% en poids de la phase continue de l'émulsion est constituée d'eau.

9. Un procédé selon l'une quelconque des revendications précédentes, caractérisé en ce que les monomères comprennent entre 40 et 60% en moles d'éthylène et entre 40 et 60% en moles de tétrafluoroéthylène et éventuellement jusqu'à 10% en moles d'un troisième monomère vinylique.

10. Un procédé selon l'une quelconque des revendications précédentes, caractérisé en ce que le monomère comprend également un monomère vinylique fluoré.
